(19) Europäisches Patentamt
European Patent Office
Office européen des brevets

(11) **EP 2 145 823 A2**

(12) **EUROPEAN PATENT APPLICATION**

(43) Date of publication:
**20.01.2010 Bulletin 2010/03**

(51) Int Cl.:
***B64D 1/16*** (2006.01)

(21) Application number: **09164702.4**

(22) Date of filing: **06.07.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(30) Priority: **18.07.2008 US 176135**<br><br>(71) Applicant: **Honeywell International Inc.**<br>**Morristown, NJ 07962 (US)** | (72) Inventors:<br>• **Kwan, William**<br>  **Morristown, NJ 07962-2245 (US)**<br>• **Zwagerman, John**<br>  **Morristown, NJ 07962-2245 (US)**<br><br>(74) Representative: **Buckley, Guy Julian**<br>**Patent Outsourcing Limited**<br>**1 King Street**<br>**Bakewell**<br>**Derbyshire DE45 1DZ (GB)** |

(54) **Methods and systems for displaying a predicted distribution of fire retardant material from an aircraft**

(57) Systems and apparatus are provided for using a flight management system (104) in an aircraft (110) for airborne fire fighting. An apparatus is provided for a display system (100) for use in an aircraft (110) equipped for transporting a fire retardant material. The display system (100) comprises a display device (102) associated with the aircraft (110), and a flight management system (104) coupled to the display device (102). The flight management system (104) is adapted to control the rendering of a navigational map (200) on the display device (102), determine a predicted distribution region (202) for a release of the fire retardant material, and overlay a graphical representation of the predicted distribution region (202) on the navigational map (200).

FIG. 2

EP 2 145 823 A2

## Description

TECHNICAL FIELD

The subject matter described herein relates generally to avionics systems, and more particularly, embodiments of the subject matter relate to flight management systems and related cockpit displays adapted for airborne fire fighting.

BACKGROUND

Currently, when a wildfire breaks out over a large region, aircraft are often deployed to combat the fire or assist ground firefighting units. Aerial firefighting units have the ability to traverse large distances quickly along with the ability to release or drop fire retardant material in regions that may be inaccessible to ground units. In most current systems, when an aircraft goes out on a fire bombardment mission, the pilot relies heavily on his or her individual skill and experience to effectively release a fire retardant over a desired region.

Some aircraft systems have been developed to assist the pilot in effectively releasing the fire retardant. However, these systems mostly rely on fighter style approaches, where the aircraft approaches and dives toward the ground, before releasing the fire retardant and pulling up. As the aircraft approaches the fire, this increases the amount of smoke encountered by the aircraft and impairs a pilot's ability to maneuver and effectively distribute the fire retardant. Additionally, when there are multiple aircraft in the area, having aircraft changing their flight level in such a manner can cause safety concerns, especially in dynamic or unpredictable wildfire scenarios. Accordingly, it is desirable to provide a system that enables more effective distribution of fire retardant from a flight level while also adapting well to dynamic and unpredictable fire fighting environments.

BRIEF SUMMARY

A method is provided for using a flight management system in an aircraft for airborne fire fighting. The method comprises determining a predicted distribution region for a release of a fire retardant material being carried by the aircraft, and displaying the predicted distribution region on a map associated with movement of the aircraft.

An apparatus is provided for a display system for use in an aircraft equipped for transporting a fire retardant material. The display system comprises a display device associated with the aircraft, and a flight management system coupled to the display device. The flight management system is adapted to control the rendering of a navigational map on the display device, determine a predicted distribution region for a release of the fire retardant material, and overlay a graphical representation of the predicted distribution region on the navigational map.

al map.

BRIEF DESCRIPTION OF THE DRAWINGS

Embodiments of the subject matter will hereinafter be described in conjunction with the following drawing figures, wherein like numerals denote like elements, and

FIG. 1 is a block diagram of a display system suitable for use in an aircraft equipped for firefighting in accordance with one embodiment;

FIG. 2 is a schematic view of an exemplary navigational map suitable for use with the display system of FIG. 1;

FIG. 3 a flow diagram of an exemplary flight plan release process suitable for use with the display system of FIG. 1 in accordance with one embodiment; and

FIG. 4 is a schematic view of an exemplary navigational map suitable for use with the flight plan release process of FIG. 3 in accordance with one embodiment.

DETAILED DESCRIPTION

The following detailed description is merely exemplary in nature and is not intended to limit the subject matter of the application and uses thereof. Furthermore, there is no intention to be bound by any theory presented in the preceding background or the following detailed description.

Techniques and technologies may be described herein in terms of functional and/or logical block components, and with reference to symbolic representations of operations, processing tasks, and functions that may be performed by various computing components or devices. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter.

For the sake of brevity, conventional techniques related to graphics and image processing, navigation, communications, flight planning, aircraft controls, aircraft guidance, sensing and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

Technologies and concepts discussed herein relate to flight management systems adapted for aerial firefighting by integrating firefighting capabilities with conventional flight management system functionality. A flight management system may be adapted to determine a predicted distribution region on the ground corresponding to a release of fire retardant material, and overlay the predicted distribution region on a navigational or terrain map displayed in an aircraft. The flight management system may be configured to allow interactivity and dynamic mapping of fire regions, waypoints, and release points, to enable effective distribution of retardant from a flight level.

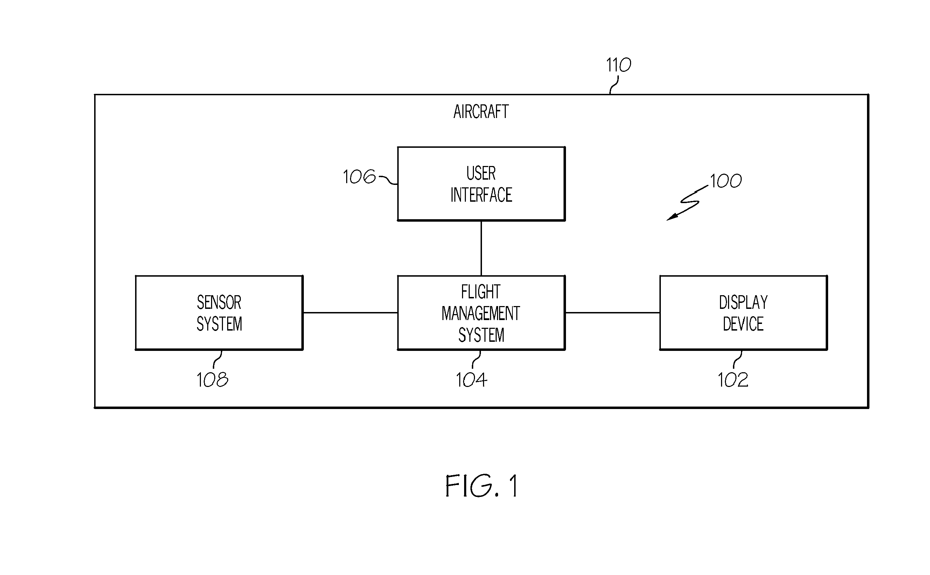

Referring now to FIG. 1, in an exemplary embodiment, a display system 100 may include, without limitation, a display device 102, a flight management system 104 (FMS), a user interface 106, and a sensor system 108. In an exemplary embodiment, one or more elements of display system 100 are located onboard an aircraft 110 equipped for transporting and dispensing a fire retardant material (e.g., an air tanker, a water bomber, a helicopter), as will be understood in the art. It should be understood that FIG. 1 is a simplified representation of a display system 100 for purposes of explanation and ease of description, and FIG. 1 is not intended to limit the application or scope of the subject matter in any way. In practice, the display system 100 and/or aircraft 110 will include numerous other devices and components for providing additional functions and features, as will be appreciated in the art.

In an exemplary embodiment, the display device 102 is coupled to the flight management system 104 and configured to display, render, or otherwise convey one or more graphical representations or images under control of the flight management system 104. A user interface 106 may be coupled to the flight management system 104, which in turn, may also be coupled to a sensor system 108. Although not shown, the flight management system 104 may be communicatively coupled to a container, tank, or another device adapted for containing and/or releasing fire retardant material (e.g., water, chemicals, and/or various combinations thereof). In accordance with one or more embodiments, the flight management system 104 is configured to initiate and/or terminate release of the fire retardant material, as described in greater detail below.

In an exemplary embodiment, the display device 102 is realized as an electronic display configured to display flight information or other data associated with operation of the aircraft 110, as will be understood. In an exemplary embodiment, the display device 102 is located within a cockpit of the aircraft 110. It will be appreciated that although FIG. 1 shows a single display device 102, in practice, additional display devices may be present. The user interface 106 may also be located within the cockpit of the aircraft 110 and adapted to allow a user (e.g., pilot, copilot, or crew) to control or interact with the display device 102 and/or flight management system 104, as described in greater detail below. In various embodiments, the user interface 106 may be realized as a keypad, touchpad, keyboard, mouse, touchscreen, joystick, or another suitable device adapted to receive input from a user. In an exemplary embodiment, the user interface 106, display device 102, and flight management system 104 are cooperatively configured to enable dynamic mapping of fire regions, fire retardant release points (or drop points), and flight planning, as described below.

It should be appreciated that although FIG. 1 shows the display device 102 and user interface 106 within the aircraft 110, in practice, either or both may be located outside the aircraft 110 (e.g., on the ground as part of an air traffic control center or another command center) and communicatively coupled to the flight management system 104 over a data link. For example, the display device 102 and/or user interface 106 may communicate with the flight management system 104 using a radio communication system or another data link system, such as a controller pilot data link (CPDL). For example, in one embodiment, a data link associated with the flight management system 104 may be modified to communicate with a firefight control command center on the ground.

In an exemplary embodiment, a sensor system 108 is configured to obtain a parameter associated with operation of the aircraft 110. It will be appreciated that although FIG. 1 shows a single sensor system 108, in practice, additional sensor systems may be present. Depending on the embodiment, the sensor system 108 may be integral with the aircraft 110, either internally or externally, or otherwise located onboard or within the aircraft 110. Alternatively, the sensor system 108 may be located a distance from the aircraft 110 (e.g., located on the ground, another aircraft, or satellite) and communicatively coupled to the flight management system 104 over a data link. In various embodiments, the sensor system 108 may include one or more of the following: infrared sensors, airspeed or windspeed sensors, temperature or thermal sensors, velocity sensors, ultrasonic sensors, flow sensors, pressure sensors, radar altimeters, attitude sensors, and/or navigation sensors. These and other possible combinations of sensors may be cooperatively configured to support operation of the display system 100 as described in greater detail below.

In an exemplary embodiment, the flight management system 104 is located onboard the aircraft 110. Although FIG. 1 is a simplified representation of display system 100, in practice, the flight management system 104 may be coupled to one or more additional modules or components (e.g., a global positioning system, navigation system, or other avionics) as necessary to support navigation, flight planning, and other conventional aircraft control functions in a conventional manner. In an exemplary embodiment, the flight management system 104 includes autopilot and/or other suitable systems for providing lateral guidance and/or navigating the aircraft 110 according to a flight plan or a series of waypoints, as will be understood.

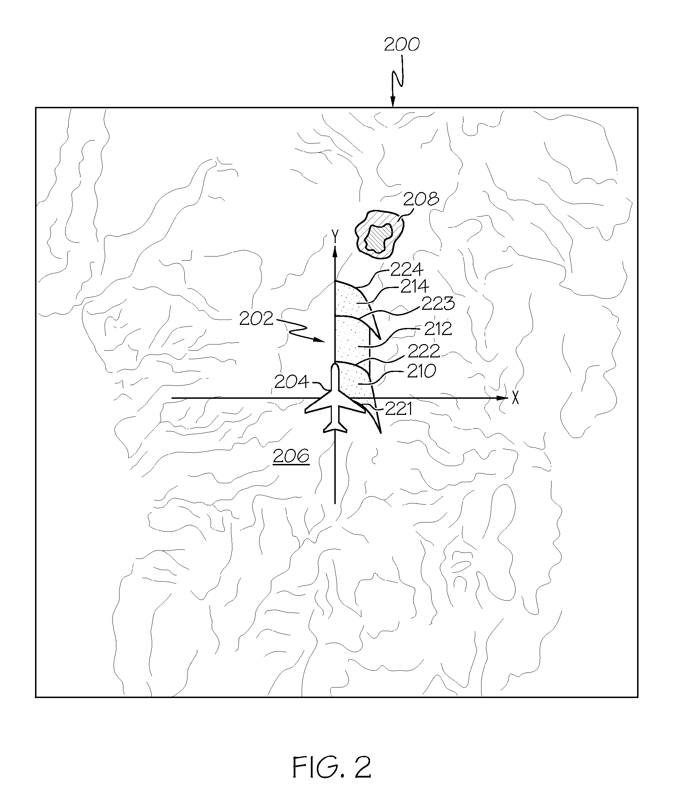

Referring now to FIG. 2, and with continued reference to FIG. 1, in an exemplary embodiment, the flight management system 104 includes or otherwise accesses a terrain database or other navigational information, such that the flight management system 104 controls the rendering of a navigational map 200 on the display device 102, which updates during flight as the aircraft 110 travels. The navigational map 200 may be based on one or more sectional charts, topographic maps, digital maps, or any other suitable commercial or military database or map, as will be appreciated in the art. In an exemplary embodiment, the flight management system 104 is adapted to determine a predicted distribution region 202. The predicted distribution region 202 represents (or corresponds to) an estimated ground coverage or dispersion pattern for an instantaneous release of fire retardant material from the aircraft 110 (e.g., at the current altitude, velocity, and other environmental factors). That is, the predicted distribution 202 represents the theoretical ground coverage of a release of fire retardant material, which will vary in size and shape as the aircraft 110 travels, as described in greater detail below.

In an exemplary embodiment, the flight management system 104 is configured to overlay a graphical representation of the distribution region 202 on the navigational map 200 displayed on the display device 102. The flight management system 104 may also be configured to display a graphical representation of the aircraft 204 on the map 200. In an exemplary embodiment, the distribution region 202 and aircraft 204 are overlaid or rendered on top of a background 206. The background 206 may be a graphical representation of the terrain, topology, or other suitable items or points of interest within a given distance of the aircraft 110, which may be maintained by the flight management system 104 in a terrain database or navigational database. The flight management system 104 may also be adapted to display a fire region 208 on the map 200, as described in greater detail below. Although FIG. 2 depicts a top view (e.g., from above the aircraft 204) of the navigational map 200, in practice, alternative embodiments may utilize various perspective views, such as side views, three-dimensional views (e.g., a three-dimensional synthetic vision display), angular or skewed views, and the like. Further, in some embodiments, the aircraft 204 may be shown as traveling across the map 200, as opposed to being located at a fixed position on the map 200 (e.g., at the center or origin), as will be understood. It should be understood that FIG. 2 does not intend to limit the scope of the subject matter in any way.

In an exemplary embodiment, the map 200 is associated with the movement of the aircraft 110, and the background 206 refreshes or updates as the aircraft 110 travels, such that the graphical representation of the aircraft 204 is positioned over the background 206 in a manner that accurately reflects the real-world positioning of the aircraft 110 relative to the earth. In accordance with one embodiment, the map 200 is updated or refreshed such that it is centered on and/or oriented with the aircraft 204. In an exemplary embodiment, the distribution region 202 is displayed relative to the aircraft 204. A user may utilize the map 200 and/or the flight management system 104 to align the distribution region 202 with the fire region 208 to indicate when fire retardant material should be released, as described in greater detail below.

In an exemplary embodiment, the distribution region 202 is realized as one or more lateral ground swaths 210, 212, 214 displayed on the navigational map 200. A lateral ground swath 210, 212, 214 represents a portion of the predicted ground coverage or fire retardant dispersion pattern for a release of fire retardant material. The lateral ground swaths 210, 212, 214 are calculated based on a number of parameters associated with operation of the aircraft 110. For example, the flow rate and/or volume of fire retardant material released will affect how the released fire retardant material interacts with the wind and the heat buoyancy of a fire to form the resulting lateral ground swath 210, 212, 214. Other parameters will also affect the shape of the distribution region 202 and/or lateral ground swaths 210, 212, 214, such as the wind speed at the aircraft altitude, the wind speed at the surface altitude, the duration of the fire retardant release, the temperature at the aircraft altitude, and the temperature at the surface altitude. The sensor system 108 may be adapted to obtain any of these or other physical parameters associated with operation of the aircraft 110. In an exemplary embodiment, the flight management system 104 is configured to dynamically adjust the shape and size of the lateral ground swaths 210, 212, 214 and/or distribution region 202 such the predicted instantaneous retardant dispersion pattern accurately reflects changing environmental conditions as the aircraft 110 travels. In the exemplary embodiment shown in FIG. 2, second order polynomials are used to approximate the shape of the lateral ground swaths 210, 212, 214, as described in greater detail below. Although the distribution region 202 is approximated by three lateral ground swaths 210, 212, 214, the number of lateral ground swaths 210, 212, 214 may vary as desired and FIG. 2 is not intended to limit the subject matter in any way.

In an exemplary embodiment, the fire region 208 is a graphical representation of an area, boundary, perimeter, hotspot, or the like. Depending on the embodiment, the location of the fire region 208 may be indicated to and/or obtained by the flight management system 104 in a variety of different ways. In accordance with one embodiment, the flight management system 104 is adapted to receive input from the user interface 106 indicative of, or otherwise corresponding to, the location of the fire region 208. For example, a user may indicate or mark a point (or region) on the display device 102 and/or map 200 via user interface 106 (e.g., a mouse or touchscreen), wherein the flight management system 104 is configured to control the rendering of the fire region 208 on the map 200 in response to the input. The location of the fire region 208 may be communicated in an auditory manner, for example, via a communications radio to a user (e.g., for subsequent input via user interface 106) or the flight management system 104 (e.g., an FMS equipped with speech recognition technology). In another embodiment, the sensor system 108 is adapted to obtain information and/or data indicating the presence or location of a fire (e.g., via infrared), wherein the flight management system 104 is configured to receive information from the sensor system 108 and control the rendering of the fire region 208 on the map 200. The sensor system 108 may be onboard the aircraft 110, or on the ground (e.g., positioned with a ground firefighting crew or dropped from the air) and communicate the information to the flight management system 104 over a data link. Alternatively, the flight management system 104 may be configured to communicate with a command center or another external system and receive fire information using a data link.

In accordance with one embodiment, a pilot or another user operating the aircraft 110 may manually navigate the aircraft 110 such that the distribution region 202 is aligned with and/or overlaps at least part of the fire region 208 on the map 200. In another embodiment, the flight management system 104 may be configured to calculate a release point (or drop point) based on the distribution region 202 and the fire region 208, by determining the location of the aircraft 110 where the distribution region 202 and/or lateral ground swath 210, 212, 214 will overlap at least part of the fire region 208. The flight management system 104 be adapted to navigate the aircraft 110 to the release point (e.g., using autopilot capability) and provide a notification when the aircraft reaches the release point, wherein the pilot (or user) may initiate a release of fire retardant material (e.g., via user interface 106) in response to the notification, as described in greater detail below.

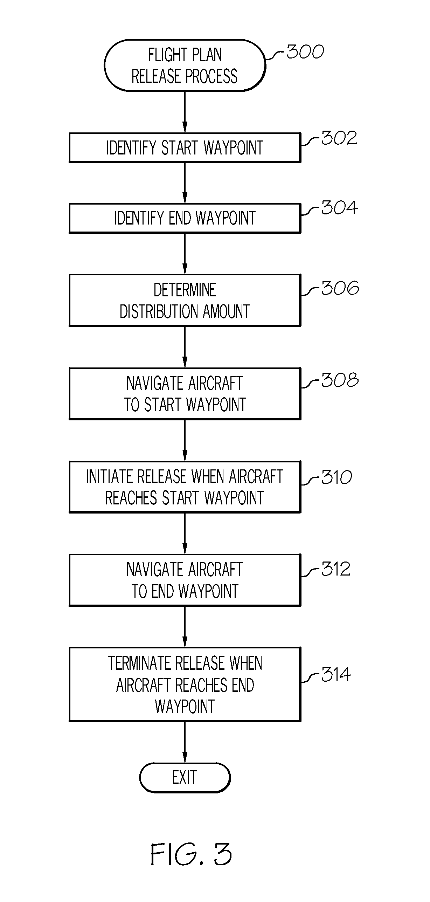

Referring now to FIG. 3, in an exemplary embodiment, a display system 100 may be configured to perform flight plan release process 300 and additional tasks, functions, and operations described below. The various tasks may be performed by software, hardware, firmware, or any combination thereof. For illustrative purposes, the following description may refer to elements mentioned above in connection with FIG. 1 and FIG. 2. In practice, the tasks, functions, and operations may be performed by different elements of the described system, such as the display device 102, the flight management system 104, the user interface 106, or the sensor system 108. It should be appreciated that any number of additional or alternative tasks may be included, and may be incorporated into a more comprehensive procedure or process having additional functionality not described in detail herein.

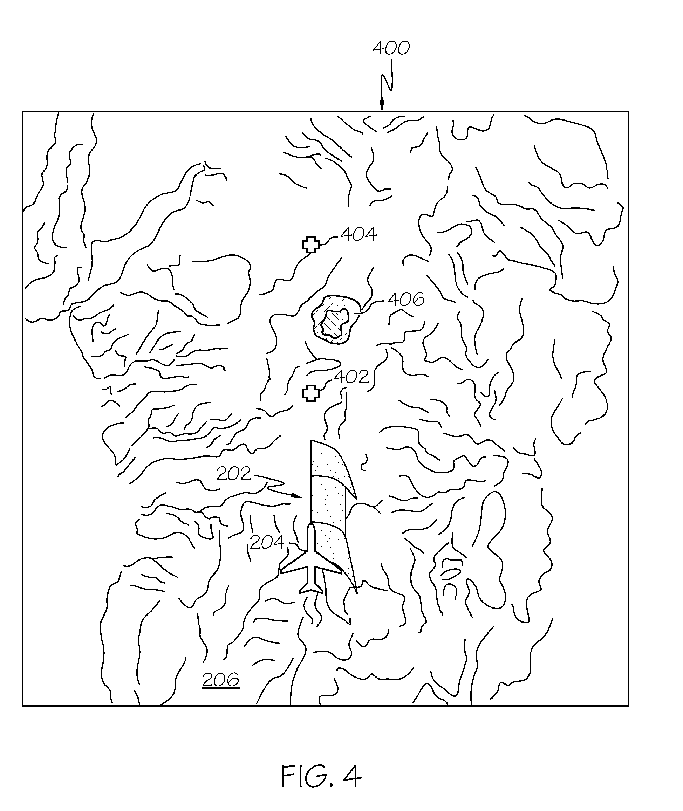

Referring again to FIG. 3, and with continued reference to FIG. 1 and FIG. 2, a flight plan release process 300 may be performed to release fire retardant material and accomplish airborne fire fighting from a flight level effectively. In an exemplary embodiment, the flight plan release process 300 is configured to identify a first waypoint and a second waypoint (task 302, 304). In this regard, the waypoints may be understood as defining a flight path or flight plan for the release of fire retardant material. For example, referring now to FIG. 4, in accordance with one embodiment, a user (e.g., a pilot, air traffic controller, or crewmember) may indicate and/or input desired first and second waypoints 402, 404 on a map 400 displayed on the display device 102 via the user interface 106. The flight management system 104 is configured to receive information from the user interface 106 and/or display device 102 and control rendering of the waypoints 402, 404 on the map 400. As shown in FIG. 4, the first waypoint 402 and second waypoint 404 may be strategically positioned relative to a desired fire region 406. In accordance with one embodiment, the flight management system 104 may be configured to calculate the second waypoint based on the aircraft speed, orientation, and a desired duration for the release of fire retardant. It should be appreciated that although the flight plan release process 300 is described in the context of a first waypoint 402 and a second waypoint 404, in practice, numerous intervening navigational waypoints may be used to accomplish various flight paths or distribution patterns as desired.

In an exemplary embodiment, the flight plan release process 300 is configured to determine an appropriate distribution amount for a release (or drop pattern) defined by the flight path (task 306). In accordance with one embodiment, the flight management system 104 is configured to calculate a flow rate and/or volume for the drop based on various factors (e.g., the distance between waypoints, number of waypoints, amount of fire retardant material onboard the aircraft, velocity of the aircraft). For example, in the case of a continuous release of retardant material between two waypoints 402, 404, the flight management system 104 may be configured to calculate a flow rate for the fire retardant material based on the distance between the first waypoint 402 and the second waypoint 404 and the amount of fire retardant material available onboard the aircraft. Alternatively, the distribution amount may be determined by user input or manual selection and/or adjustment (e.g., via user interface 106). In other embodiments, the flow rate may be fixed based on the type of fire fighting equipment that the aircraft is equipped with.

In an exemplary embodiment, the flight plan release process 300 is configured to navigate the aircraft to the first waypoint (task 308). For example, the flight management system 104 may navigate the aircraft to the first waypoint 402, using an autopilot feature or other similar functionality. Alternatively, a pilot may manually navigate the aircraft to the first waypoint 402, for example, by using the information displayed on the map 400 to assist in navigating the aircraft. In an exemplary embodiment, the flight plan release process 300 is configured to initiate a release of the fire retardant material when the aircraft reaches a location corresponding to the first waypoint (task 310). The flight management system 104 may detect when the aircraft reaches a location that corresponds with the first waypoint 402. Depending on the embodiment, the flight management system 104 may be configured to automatically initiate release of the fire retardant material in response to reaching the first waypoint 402, or alternatively, the flight management system 104 may provide a notification to the user when the first waypoint 402 is reached. In accordance with one embodiment, the flight management system 104 may be configured to automatically initiate a release of the fire retardant material in response to the notification, or alternatively, by detecting that the distribution region 202 overlaps at least part of the fire region 208. In another embodiment, the user may manually determine when to release the fire retardant, for example, by observing and waiting until the distribution region 202 on the map 400 overlaps at least part of the first waypoint 402 or a fire region 406 displayed near the first waypoint 402. In an exemplary embodiment, the fire retardant material is released at the previously determined distribution amount or flow rate (task 306).

In an exemplary embodiment, the flight plan release process 300 is configured to navigate the aircraft toward the second waypoint (task 312). For example, the flight management system 104 may navigate the aircraft (e.g., using autopilot), or alternatively, a pilot may navigate the aircraft manually by using information on the map 400. In an exemplary embodiment, the shape and size of distribution region 202 and/or lateral ground swaths will vary as the aircraft travels between waypoints 402, 404. In accordance with one embodiment, the fire retardant material may be continuously released (or released until there is no remaining fire retardant material onboard the aircraft) between the first waypoint 402 and the second waypoint 404 to create a firebreak, control line, or the like. In such an embodiment, the flight plan release process 300 may be configured to terminate the release of the fire retardant material when the aircraft reaches a location corresponding to the second waypoint (task 314). For example, the flight management system 104 may detect when the aircraft reaches a location that corresponds to the second waypoint 404, and automatically terminate release the fire retardant material in response to reaching the second waypoint 404. Alternatively, the flight management system 104 may provide a notification to the user when the second waypoint 404 is reached. In another embodiment, the user may manually determine when to terminate the release of fire retardant, for example, by waiting until the distribution region 202 on the map 400 no longer overlaps a fire region displayed near the second waypoint 404. It should be appreciated that in practice, numerous additional or intervening waypoints may be incorporated into a flight plan release process 300, and the flight plan release process 300 may be configured to repeat or make multiple passes of an area or fire region as desired.

Lateral Ground Swath Calculation Example

As described above, in an exemplary embodiment, the distribution region 202 and/or lateral ground swath 210, 212, 214 represents a predicted ground coverage (or dispersion pattern) of an instantaneous release of fire retardant material based on a number of different factors. In practice, the shape of the actual distribution region will vary depending on the flow rate and/or volume of fire retardant material to be released. For example, the retardant dispersion pattern for some larger aircraft is shaped like a large column whereas for smaller aircraft the dispersion pattern is more conical in shape. As such, the particular manner of determining the predicted distribution region 202 and/or lateral ground swath 210, 212, 214 will be implementation specific. Accordingly, it should be understood that the following discussion of determining the shape, size and/or positioning of the lateral ground swaths and/or distribution region is for exemplary purposes, and is not intended to limit the scope of the subject matter in any way.

Referring again to FIG. 2, in an exemplary embodiment, the duration of a release or drop ($t$) is divided into segments. The duration may be determined, for example, by calculation (e.g., based on the distance between waypoints and aircraft velocity) or by manual input or selection. In the depicted embodiment, the duration is divided into four segments (e.g., $i$=0...3) and a second order polynomial (e.g., $y_i = a_i x_i^2 + b_i x_i + c_i$) is used to approximate the instantaneous shape of a lateral ground swath boundary for each time segment. For a first ($i$=0) segment boundary 221, $a_0 = -k_1 \overline{W}_a \sqrt{h}$, $b_0 = 0$, and $c_0 = 0$, while $x_i$ is varied from 0 to $k_2 \overline{W}_x \sqrt{h}$, where $k_1$ and $k_2$ are constants, $h$ is the aircraft altitude, and $\overline{W}_x$ is the cross track component (e.g., in the x-direction) and $\overline{W}_a$ is the along track component (e.g., in the y-direction) of the average wind vector. The average wind vector may be determined by averaging the wind vector at the aircraft altitude and the wind vector at the surface. For a second ($i$=1) segment boundary 222 and a third ($i$=2) segment boundary 223, $a_i = -k_3 \overline{W}_a \sqrt{h}$, $b_i = k_4 a_i |T_h - T_s|$, and $c_i = i \cdot t \cdot V_a / 3$, while $x_i$ is varied from 0 to $k_5 \overline{W}_x \sqrt{h}$, where

$k_3$, $k_4$, $k_5$ are constants, $V_a$ is the along track component of the aircraft ground velocity, $T_h$ is the temperature at the drop altitude, and $T_s$ is the temperature at the surface altitude. The endpoints of the first segment boundary 221 and the second segment boundary 222 may be connected, by a straight line or some other shape) to form the first lateral ground swath 210, while the endpoints of the second segment boundary 222 and the third segment boundary 223 may be connected to form the second lateral ground swath 212. For a fourth ($i$=3) time segment boundary 224, $a_3 = -k_6\overline{W}_a\sqrt{h}$, $b_3 = 0$, and $c_3 = V_a t$, while $x_i$ is varied from 0 to $k_7\overline{W}_x\sqrt{h}$, where $k_6$, $k_7$ are constants. The endpoints of the third segment boundary 223 and the fourth segment boundary 224 may be connected to form the third lateral ground swath 214. The model described above assumes a large fuel flow, so that the earlier and later released fire retardant material is more subject to the dispersion effects of the wind, but the intermediately released fire retardant material is denser and influenced more by the buoyancy than the dispersive effect of the wind. It should be understood that this is merely an example of how a distribution region 202 and/or lateral ground swath 210, 212, 214 may be determined, and numerous other methods may be used to approximate distribution regions and/or lateral ground swaths with various sizes, shapes, and levels of accuracy. For example, different equations, constants and/or coefficients may be used depending on the type of aircraft or distribution amount (e.g., flow rate and/or volume) of the fire retardant material.

To briefly summarize, the methods and systems described above utilize a predicted distribution region for an instantaneous release of fire retardant material, which is overlaid on a navigational map, allowing the pilot and/or crew to distribute the fire retardant more effectively. An interactive flight management system allows for the fire region to be mapped correctly as the fire spreads, and flight planning capabilities allow a user to create a flight path to efficiently distribute the fire retardant.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It being understood that various changes may be made in the function and arrangement of elements described in an exemplary embodiment without departing from the scope of the subject matter as set forth in the appended claims.

**Claims**

1. A method for using a flight management system (104) in an aircraft (110) for airborne fire fighting, the method comprising:

   determining a predicted distribution region (202) for a release of a fire retardant material, the fire retardant material being carried by the aircraft (110); and
   displaying the predicted distribution region (202) on a map (200) associated with movement of the aircraft (110).

2. The method of claim 1, wherein determining the predicted distribution region (202) further comprises calculating a lateral ground swath (210) based on a plurality of parameters associated with operation of the aircraft (110).

3. The method of claim 2, wherein calculating the lateral ground swath (210) is based on altitude and velocity data for the aircraft (110).

4. The method of claim 2, further comprising identifying a desired distribution of the fire retardant material, wherein calculating the lateral ground swath (210) is based on the desired distribution.

5. The method of claim 1, further comprising displaying a graphical representation (204) of the aircraft (110) on the map (200), the predicted distribution region (202) being displayed relative to the graphical representation (204) of the aircraft (110).

6. The method of claim 1, further comprising:

   identifying a first waypoint (402), the first waypoint (402) being indicated on the map (200);
   detecting when the aircraft (110) reaches a first location corresponding to the first waypoint (402); and
   initiating release of the fire retardant material in response to the aircraft (110) reaching the first waypoint (402).

7. The method of claim 6, further comprising:

   identifying a second waypoint (404), the second waypoint (404) being indicated on the map (200);
   detecting when the aircraft (110) reaches a second location corresponding to the second waypoint (404); and
   terminating release of the fire retardant material in response to the aircraft (110) reaching the second waypoint (404).

**8.** The method of claim 7, further comprising:

calculating a flow rate for the fire retardant material based on a distance between the first waypoint (402) and the second waypoint (404); and releasing the fire retardant material at the flow rate.

**9.** The method of claim 1, further comprising:

indicating a first release point (402) on the map (200); and releasing the fire retardant material when the predicted distribution region (202) overlaps at least part of the first release point (402).

**10.** A display system (100) for use in an aircraft (110) equipped for transporting a fire retardant material, the display system (100) comprising:

a display device (102) associated with the aircraft (110); and a flight management system (104) coupled to the display device (102), the flight management system (104) being adapted to:

control the rendering of a navigational map (200) on the display device (102); determine a predicted distribution region (202) for a release of the fire retardant material; and overlay a graphical representation of the predicted distribution region (202) on the navigational map (200).

FIG. 1

EP 2 145 823 A2

FIG. 2

```
        ╭─────────────────╮
        │   FLIGHT PLAN   │ ⟋300
        │ RELEASE PROCESS │
        ╰─────────────────╯
                 │
                 ▼
        ┌─────────────────┐
        │ IDENTIFY START WAYPOINT │ ⟋302
        └─────────────────┘
                 │
                 ▼
        ┌─────────────────┐
        │ IDENTIFY END WAYPOINT │ ⟋304
        └─────────────────┘
                 │
                 ▼
        ┌─────────────────┐
        │    DETERMINE    │ ⟋306
        │ DISTRIBUTION AMOUNT │
        └─────────────────┘
                 │
                 ▼
        ┌─────────────────┐
        │ NAVIGATE AIRCRAFT │ ⟋308
        │ TO START WAYPOINT │
        └─────────────────┘
                 │
                 ▼
        ┌─────────────────┐
        │ INITIATE RELEASE WHEN AIRCRAFT │ ⟋310
        │ REACHES START WAYPOINT │
        └─────────────────┘
                 │
                 ▼
        ┌─────────────────┐
        │ NAVIGATE AIRCRAFT │ ⟋312
        │ TO END WAYPOINT │
        └─────────────────┘
                 │
                 ▼
        ┌─────────────────┐
        │ TERMINATE RELEASE WHEN │ ⟋314
        │ AIRCRAFT REACHES END │
        │ WAYPOINT │
        └─────────────────┘
                 │
                 ▼
        ╭─────────────────╮
        │      EXIT       │
        ╰─────────────────╯
```

FIG. 3

FIG. 4